(19) Europäisches Patentamt / European Patent Office / Office européen des brevets

(11) **EP 2 525 205 A1**

(12) **EUROPEAN PATENT APPLICATION**

(43) Date of publication:
21.11.2012  Bulletin 2012/47

(21) Application number: 12168127.4

(22) Date of filing: 15.05.2012

(51) Int Cl.:
G01M 3/26 (2006.01)　　B60H 1/00 (2006.01)
F25B 41/00 (2006.01)　　F25B 45/00 (2006.01)
G01M 3/32 (2006.01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 17.05.2011  US 201161487075 P

(71) Applicant: Service Solutions U.S. LLC
Wilmington, DE 19801 (US)

(72) Inventors:
• Brown, William
Owatonna, MN 55060 (US)
• Mcmaster, Mark
Owatonna, MN 55060 (US)
• Murray, Gary
Montpelier, OH 43543 (US)

(74) Representative: Nguyen Van Yen, Christian
Marks & Clerk France
Immeuble Visium
22, avenue Aristide Briand
94117 Arcueil Cedex (FR)

(54) **Pressure decay leak check method and apparatus**

(57)　Refrigerant recovery unit is provided that includes steps to test for refrigerant leaks. The steps include providing a close loop with the hoses that connect to a refrigerant system, measuring the ambient temperature, calculating the vapor pressure with the ambient temperature, calculating the test pressure as a percentage of the vapor pressure, filling the unit with the refrigerant, and performing a pressure leak test.

FIG. 1

EP 2 525 205 A1

**Description**

FIELD OF THE INVENTION

The disclosure generally relates to equipment for servicing vehicle air conditioning systems, and more particularly a method that checks for pressure decay leak in a refrigerant recovery unit used to service a vehicle.

BACKGROUND OF THE INVENTION

Portable refrigerant recovery units or carts are used in connection with the service and maintenance of refrigeration systems such as a vehicle's air conditioning system. The refrigerant recovery unit connects to the air conditioning system of the vehicle to recover refrigerant out of the system, separate out oil and contaminants from the refrigerant in order to recycle the refrigerant, and recharge the system with additional refrigerant.

New refrigerants such as 1234yf are flammable and thus having a leak can cause a fire in the refrigerant recovery units. The leak can affect the performance and accuracy of the refrigerant recovery units, and can cause harmful refrigerant to be released into the atmosphere. Because 1234yf refrigerant can be relatively expensive, having a method to detect the leaks will save money for the service center that owns the refrigerant recovery units and fixing any leak is also beneficial for the environment.

SUMMARY OF THE INVENTION

In accordance with one embodiment of the present invention, a refrigerant recovery unit is provided and includes a method to check for a pressure decay leak.

In one embodiment of the invention, a method of performing a pressure leak test on a refrigerant recovery unit is provided, which can comprise measuring an ambient temperature with a temperature sensor controlled by a controller of the refrigerant recovery unit, determining a saturated vapor pressure with the measured ambient temperature using the controller, determining a test pressure as a percentage of the determined saturated vapor pressure using the controller, measuring a first pressure in the refrigerant recovery unit with a pressure sensor controlled by the controller, and determining if the refrigerant recovery unit has passed the pressure leak test with the controller.

In another embodiment of the invention, a method of performing a pressure leak test on a refrigerant recovery unit is provided, which can comprise measuring an ambient temperature with a temperature sensor controlled by a controller of the refrigerant recovery unit, determining a saturated vapor pressure with the measured ambient temperature using the controller, determining a test pressure as a percentage of the determined saturated vapor pressure, and determining if the refrigerant recovery unit has passed the pressure leak test with the controller.

In yet another embodiment of the invention, a refrigerant recovery unit having a pressure leak test is provided, which can comprise a recovery circuit configured to recover a refrigerant from a refrigerant system, a charging circuit configured to charge the refrigerant into the refrigerant system, a recycling circuit configured to recycle refrigerant recovered from the refrigerant system, a refrigerant storage tank in fluid communication with the recovery, charging and recycling circuits, and a controller that controls the recovery, charging and recycling circuits, wherein the controller performs the following steps: measuring an ambient temperature with a temperature sensor, determining a saturated vapor pressure with the measured ambient temperature, determining a test pressure as a percentage of the determined saturated vapor pressure, measuring a first pressure in the refrigerant recovery unit with a first pressure sensor, determining if the measured first pressure of the refrigerant recovery unit is above the determined test pressure, and determining if the refrigerant recovery unit has passed the pressure leak test.

There has thus been outlined, rather broadly, certain embodiments of the invention in order that the detailed description thereof herein may be better understood, and in order that the present contribution to the art may be better appreciated. There are, of course, additional embodiments of the invention that will be described below and which will form the subject matter of the claims appended hereto.

In this respect, before explaining at least one embodiment of the invention in detail, it is to be understood that the invention is not limited in its application to the details of construction and to the arrangements of the components set forth in the following description or illustrated in the drawings. The invention is capable of embodiments in addition to those described and of being practiced and carried out in various ways. Also, it is to be understood that the phraseology and terminology employed herein, as well as the abstract, are for the purpose of description and should not be regarded as limiting.

As such, those skilled in the art will appreciate that the conception upon which this disclosure is based may readily be utilized as a basis for the designing of other structures, methods and systems for carrying out the several purposes of the present invention. It is important, therefore, that the claims be regarded as including such equivalent constructions insofar as they do not depart from the spirit and scope of the present invention.

BRIEF DESCRIPTION OF THE DRAWINGS

FIG. 1 is a fragmentary front plan view of an example refrigerant recovery unit shown with a portion of the front cover removed according to an embodiment of the invention.

FIG. 2 is a fragmentary rear plan view of the refrigerant recovery unit shown in FIG. 1 according to an embodiment of the invention.

FIG. 3 is an example of a flow diagram of the refrigerant recovery unit shown in FIGS. 1 and 2 according to an embodiment of the invention.

FIG. 4 is a front plan view of another example refrigerant recovery unit according to an embodiment of the invention.

FIG. 5 is another example of a flow diagram of the refrigerant recovery unit shown in FIGS. 1, 2 and 4 according to an embodiment of the invention.

FIGS. 6A and B illustrate a method to check for refrigerant leaks that may occur in the refrigerant recovery unit according to an embodiment of the invention.

DETAILED DESCRIPTION

The invention will now be described with reference to the drawing figures, in which like numerals refer to like parts throughout. A refrigerant recovery unit is provided that includes the ability to self-check for refrigerant leaks in order to prevent continued venting of a refrigerant into the atmosphere.

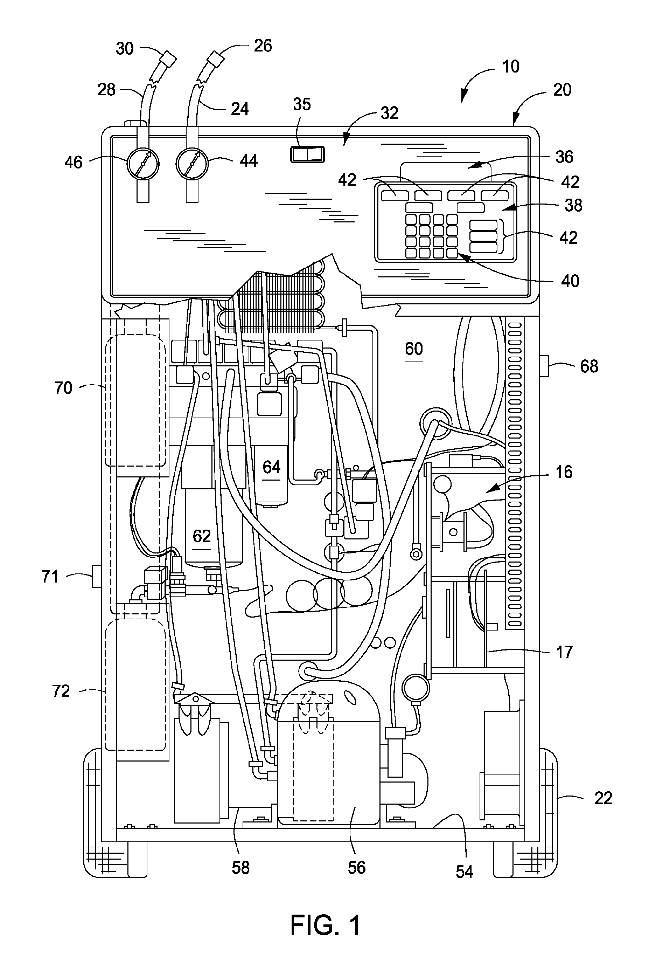

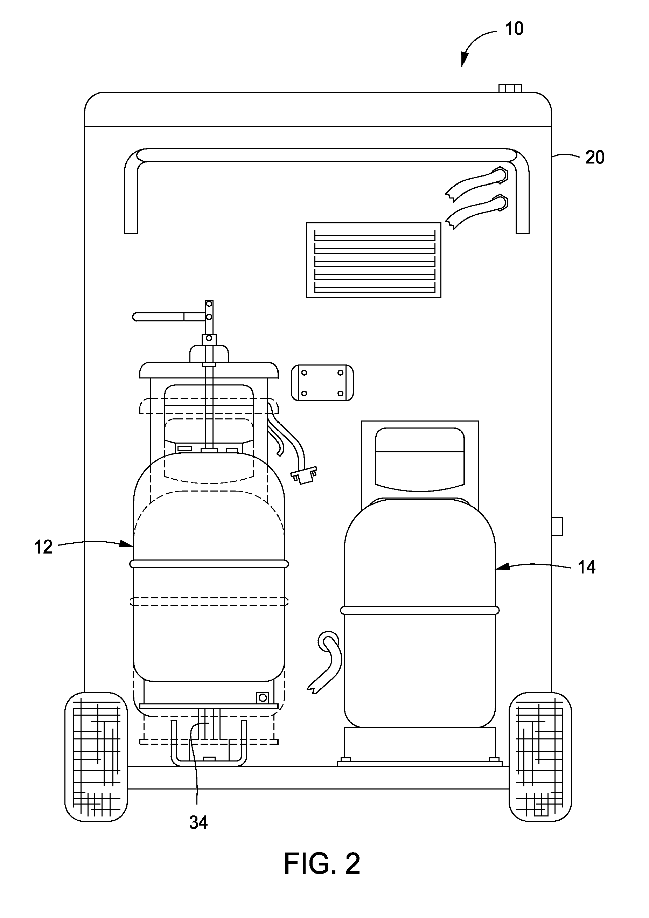

FIGS. 1 and 2 show an example of a portable refrigerant recovery unit 10 (recovery unit) constructed according to principles of the invention, for recovering, recycling, and recharging refrigerant from a refrigerant system of a vehicle. Other refrigerant systems, such as ones in a house or a building, are also within the embodiments of this invention.

The refrigerant recovery unit 10 is a machine having a cabinet 20 supported by a pair of wheels 22, for portability. The refrigerant recovery unit 10 includes a first container or main tank 12 for holding a primary supply of refrigerant, such as 1234yf. The main tank 12 may also be referred to as an internal storage vessel (ISV). The main tank 12 contains refrigerant that has been recovered from the air conditioning system. The refrigerant recovery unit 10 also includes a second container or auxiliary tank 14 for holding a secondary supply of refrigerant. The secondary supply of refrigerant has a known chemical composition, and is sometimes referred to as fresh refrigerant, virgin refrigerant or recharging refrigerant. The auxiliary tank 14 is arranged to be in fluid communication with the main tank 12 so that fresh refrigerant can be transferred from the auxiliary tank 14 to the main tank 12, as needed.

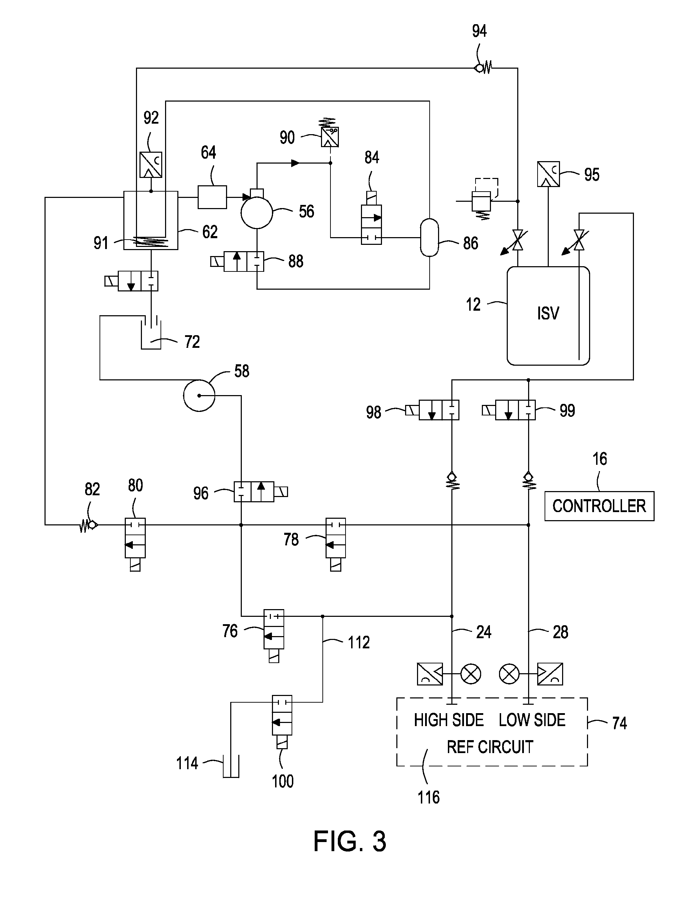

An electronic controller 16 includes a microprocessor on a circuit board 17. The electronic controller 16 controls, among other things, the transfer of refrigerant from the auxiliary tank 14 to the main tank 12 and between the main tank 12 and a refrigeration system 74 (FIG. 3). The controller 16 also controls electromechanical solenoid valves, including solenoid valves 76, 78, 80, 84, 88, 96, 98, 100 (FIG. 3). However, each solenoid valve in the refrigerant recovery unit 10 may be connected and controlled by the controller 16. The controller 16 may include a memory unit (not shown) to store software and data, and the microprocessor may be coupled to the memory unit for executing the software stored in the memory unit. The electronic controller 16 receives data signals from a variety of devices and sensors, including pressure sensors 92, 95, temperature sensors 68 that measure the ambient temperature, control switches (on the control panel 32), and a weighing device 34.

The weighing device 34 shown in the example embodiment is a load cell, but the weighing device may also be any type of electronic scale or any other type of weighing device configurable to transmit a weight data signal to the controller 16. As shown in FIG. 2, the main tank 12 rests on the weighing device 34. The weighing device 34 provides a weight data signal to the controller 16 such that the weight of the tank comprising its tare weight plus the weight of refrigerant therein is monitored by the controller 16.

The control panel 32 includes an on/off switch 35 and a display 36 for displaying the operational status of the refrigerant recovery unit's operation. The display 36 may also display instructions to a user of the refrigerant recovery unit 10. The display may be an LCD display or other suitable electronic display that is coupled to the controller 16 by way of a conventional input/output circuit. The control panel 32 further includes a switch panel 38 having a conventional keyboard 40, and a plurality of push-button switches 42 for controlling the operation of the refrigerant recovery unit 10 through its various phases of operation and/or for selecting parameters for display. The keyboard 40 in conjunction with push-button switches 42 and display 36 allow the user to enter the desired operational parameters for the refrigerant recovery unit 10 according to manufacturer specifications for the servicing of an air conditioning system in a particular vehicle.

The refrigerant recovery unit 10 includes a high pressure hose 24, typically color coded red, with a coupling 26 for coupling to the high pressure port of a vehicle refrigeration system and a low pressure hose 28, typically color coded blue, having a coupling 30 for coupling to the low pressure port. The couplings 26 and 30 can also be coupled back into the refrigerant recovery unit at storage ports 71 so as to form a "closed loop." In various embodiments, either the couplings 26, 30 can be coupled together or can be coupled together through an intermediary hose. That is coupling 26 can be coupled at one end of the intermediary hose and coupling 30 can be coupled at the other end.

In some refrigerant systems, there may be only one port, for example, where the recovery or low pressure port is eliminated. In such systems, the refrigerant recovery unit may be configured with one hose, in accordance with the principles of the invention.

The front panel of the cabinet 20 is shown broken away in FIG. 1 to show the major elements of the refrigerant recovery unit 10. The hoses 24 and 28 are coupled to pressure gauges 44 and 46, respectively, which are mounted on the front panel of refrigerant recovery unit 10, as seen in FIG. 1. In addition, electrical pressure transducers (not shown) may be coupled to the hoses 24 and 28, and to the controller 16 through conventional input/output circuits to provide the controller 16 with pressure information during operation of the refrigerant recovery unit 10. Gauges 44 and 46 provide the user with a conventional analog or digital display of the pressure.

Mounted to the floor 54 of cabinet 20 is a fluid compressing means or compressor 56 and a vacuum means or vacuum pump 58. Behind the front of cabinet 20 on floor 54, is mounted the main tank 12 of refrigerant (FIG. 2) for the supply of refrigerant to the refrigerant system being serviced. Also, mounted adjacent the main tank 12 is the auxiliary supply tank 14 which supplies additional refrigerant to the main tank 12. Hoses and connectors together with control valves couple auxiliary supply tank 14 to main tank 12.

Mounted to the inside of rear wall 60 of cabinet 20 is an oil separator 62 and a compressor oil separator filter 64. A pressure transducer 92 (FIG. 3) is coupled to the oil separator so that pressure in the refrigerant recovery unit 10 can be measured. In addition, a fresh oil canister 70 is mounted within a side compartment of cabinet 20. A recovery or waste oil container 72 is mounted on the lower part of the cabinet 20 to receive oil drained from the oil separator 62.

Having briefly described the major components of the refrigerant recovery unit 10, a more detailed description of the structure and operation of the example refrigerant recovery unit 10 follows in connection with reference to FIG. 3.

With respect to a recovery process, one example of a refrigerant recovery circuit is described below and shown in FIG. 3. To recover refrigerant, initially, hoses 24 and 28 (FIG. 1) are coupled to the refrigeration system 74 of a vehicle, and the recovery cycle is initiated by the opening of high pressure and low pressure solenoids 76, 78, respectively. This allows the refrigerant within the refrigeration system 74 to flow through a recovery valve 80 and a check valve 82. The refrigerant flows from the check valve 82 into a system oil separator 62, where it travels through a filter/dryer 64, to an input of a compressor 56. Refrigerant is drawn through the compressor 56 through a normal discharge solenoid 84 and through the compressor oil separator 86, which circulates oil back to the compressor 56 through an oil return valve 88. The refrigerant recovery unit 10 includes a high pressure switch 90 in communication with the controller 16, which is programmed to determine an upper pressure limit, for example, 435 psi, to shut down the compressor 56 to protect the compressor 56 from excessive pressure, although this feature is optional. If a purging of the refrigerant recovery unit 10 is desired, a high-side clear solenoid (not shown) may optionally be coupled to the output of the compressor 56 to release the recovered refrigerant transferred from compressor 56 directly into the main tank 12, instead of through a path through the normal discharge solenoid 84.

The heated compressed refrigerant exits the oil separator 86 and then travels through a loop of conduit or heat exchanger 91 for cooling or condensing. As the heated refrigerant flows through the heat exchanger 91, it gives off heat to the cold refrigerant in the system oil separator 62, and assists in maintaining the temperature in the system oil separator 62 within a working range. Coupled to the system oil separator 62 is a switch or transducer 92, such as a low pressure switch or pressure transducer, for example, that senses pressure information, and provides an output signal to the microprocessor 16 through a suitable interface circuit programmed to detect when the refrigerant recovery unit 10 has recovered the refrigerant down to 13 inches of mercury, for example. The pressure transducer 92 can be used to determine the pressure in the refrigerant recovery unit 10. Finally, the recovered refrigerant flows through a normal discharge check valve 94 and into the main tank 12.

The evacuation cycle begins by the opening of high pressure and low pressure solenoids 76 and 78 and valve 96, leading to the input of a vacuum pump 58. Prior to opening valve 96, an air intake valve (not shown) is opened, allowing the vacuum pump 58 to start up exhausting air. The vehicle system 74 is then evacuated by the closing of the air intake valve and the opening of valve 96, allowing the vacuum pump 58 to exhaust any trace gases remaining until the pressure is approximately 29 inches of mercury, for example. When this occurs, as detected by pressure transducers optionally coupled to the high side and low side of the refrigeration system 74 and to the controller 16, the controller 16 actuates valve 96 by turning it off and beginning the recharging cycle.

The recharging cycle begins by opening charge valve 98, 99 to allow the liquid refrigerant in tank 12, which is at a pressure of approximately 70 psi or above, to flow through the high side of the refrigeration system 74. A pressure transducer 95 can be used to measure the pressure in the tank 12. The flow is through charge valve 98, 99 for a period of time programmed to provide a full charge of refrigerant to the vehicle.

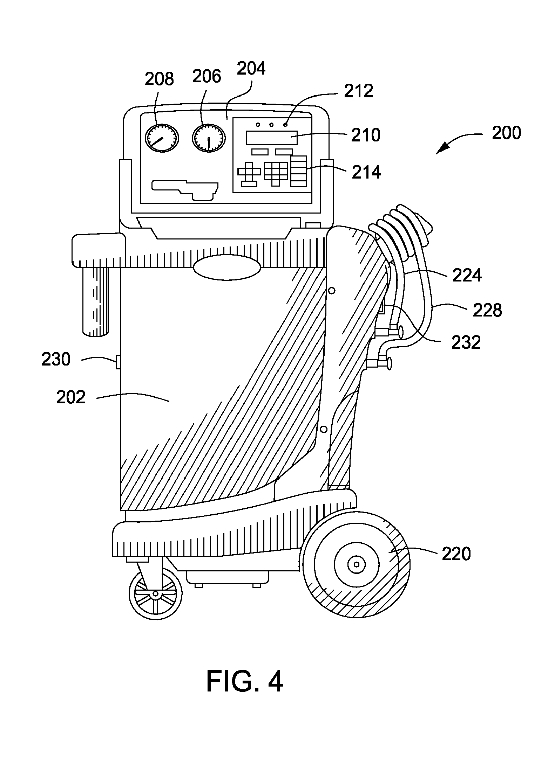

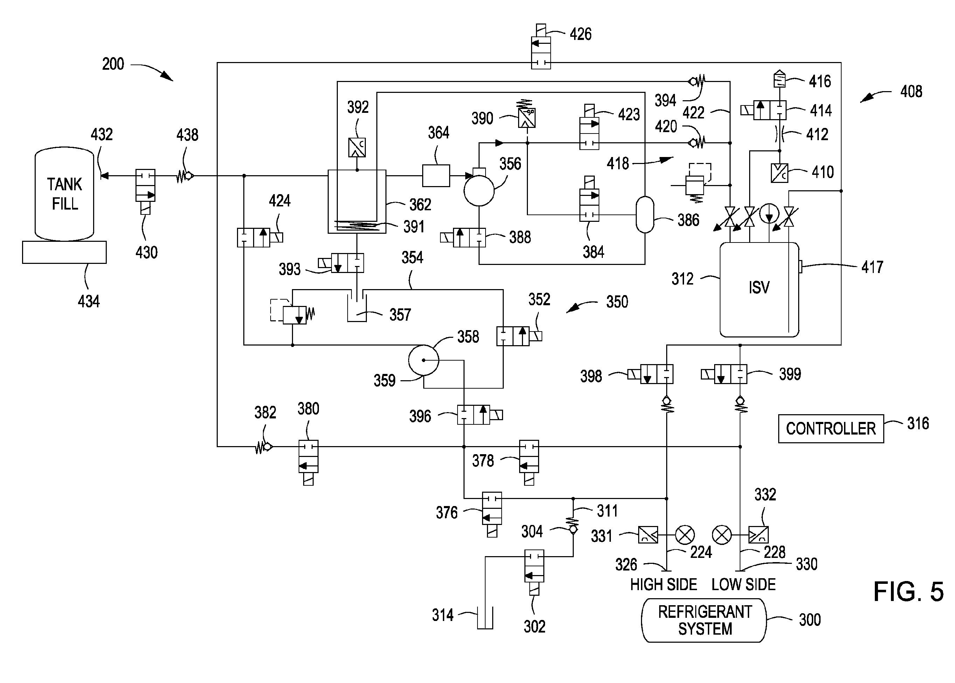

FIG. 4 is a front plan view of another example refrigerant recovery unit 200 according to an embodiment of the invention. The refrigerant recovery unit 200 can be the CoolTech 34788™ from Robinair™ based in Owatonna, MN (Service Solutions U.S. LLC). The refrigerant recovery unit 200 includes a cabinet 202 to house components of the system (See FIG. 5). The cabinet 202 may be made of any material such as thermoplastic, steel and the like.

The cabinet 202 includes a control panel 204 that allows the user to operate the refrigerant recovery unit 200. The control panel 204 may be part of the cabinet as shown in FIG. 4 or separated. The control panel 204 includes high and low gauges 206, 208, respectively. The gauges may be analog or digital as desired by the user. The control panel 204 has a display 210 to provide information to the user, such as certain operating status of the refrigerant recovery unit 200 or provide messages or menus to the user. Located near the display 210 are LEDs 212 to indicate to the user the operational status of the refrigerant recovery unit 200. A user interface 214 is also included on the control panel 204. The user interface 214 allows the user to interact and operate the refrigerant recovery unit 200 and can include an alphanumeric keypad and directional arrows.

The cabinet 202 further includes connections for hoses 224, 228 that connect the refrigerant recovery unit 200 to a refrigerant containing device, such as the vehicle's refrigerant system 300 (shown in FIG. 2). An ambient temperature sensor 230 may be located on the cabinet 202 to measure the ambient temperature around the refrigerant recovery unit 200. Additionally, storage ports 232 may be used to connect hoses 224, 228 back into the refrigerant recovery unit 200 to form a "close loop." In order for the refrigerant recovery unit 200 to be mobile, wheels 220 are provided at a bottom portion of the system.

FIG. 5 illustrates components of the refrigerant recovery unit 200 of FIG. 4 according to another embodiment of the present invention. In one embodiment, to recover refrigerant, service hoses 224 and 228 are coupled to the refrigeration system 300 of the vehicle, via couplers 326 (high side) and 330 (low side), respectively. The couplers are designed to be closed until they are coupled to the refrigerant system 300.

The recovery cycle is initiated by the opening of high pressure and low-pressure solenoids 376, 378, respectively. This allows the refrigerant within the vehicle's refrigeration system 300 to flow through a recovery valve 380 and a check valve 382. The refrigerant flows from the check valve 382 into a system oil separator 362, where it travels through a filter/dryer 364, to an input of a compressor 356. Refrigerant is drawn through the compressor 356 through a normal discharge solenoid 384 and through a compressor oil separator 386, which circulates oil back to the compressor 356 through an oil return valve 388. The refrigerant recovery unit 200 may include a high-pressure switch 390 in communication with a controller 316, which is programmed to determine an upper pressure limit, for example, 435 psi, to optionally shut down the compressor 356 to protect the compressor 356 from excessive pressure. The controller 316 can also be, for example, a microprocessor, a field programmable gate array (FPGA) or application-specific integrated circuit (ASIC). The controller 316 via a wired or wireless connection (not shown) controls the various valves and other components (e.g. vacuum, compressor) of the refrigerant recovery unit 200. In some embodiments of the present disclosure, any or all of the electronic solenoid or electrically activated valves, pressure and temperature sensors may be connected and controlled by the controller 316.

A high-side clear solenoid 423 may optionally be coupled to the output of the compressor 356 to release the recovered refrigerant transferred from compressor 356 directly into a storage tank 312, instead of through a path through the normal discharge solenoid 384.

The heated compressed refrigerant exits the oil separator 386 and then travels through a loop of conduit or heat exchanger 391 for cooling or condensing. As the heated refrigerant flows through the heat exchanger 391, the heated refrigerant gives off heat to the cold refrigerant in the system oil separator 362, and assists in maintaining the temperature in the system oil separator 362 within a working range. Coupled to the system oil separator 362 is a switch or transducer 392, such as a low pressure switch or pressure transducer, for example, that senses pressure information, and provides an output signal to the controller 316 through a suitable interface circuit programmed to detect when the pressure of the recovered refrigerant is down to 13 inches of mercury, for example. An oil separator drain valve 393 drains the recovered oil into a container 357. Finally, the recovered refrigerant flows through a normal discharge check valve 394 and into the storage tank 312.

The evacuation cycle begins by the opening of high pressure and low-pressure solenoids 376 and 378 and valve 396, leading to the input of a vacuum pump 358. Prior to opening valve 396, an air intake valve (not shown) is opened, allowing the vacuum pump 358 to start exhausting air. The vehicle's refrigerant system 300 is then evacuated by the closing of the air intake valve and opening the valve 396, allowing the vacuum pump 358 to exhaust any trace gases remaining until the pressure is approximately 29 inches of mercury, for example. When this occurs, as detected by pressure transducers 331 and 332, optionally, coupled to the high side 326 and low side 330, respectively, of the vehicle's refrigeration system 300 and to the controller 316, the controller 316 turns off valve 396 and this begins the recharging cycle.

The recharging cycle begins by opening charge valve 398 to allow the refrigerant in storage tank 312, which is at a pressure of approximately 70 psi or above, to flow through the high side of the vehicle's refrigeration system 300. The flow is through charge valve 398 for a period of time programmed to provide a full charge of refrigerant to the vehicle. Optionally, charge valve 399 may be opened to charge the low side. The charge valve 399 may be opened alone or in conjunction with charge valve 398 to charge the vehicle's refrigerant system 300. The storage tank 312 may be disposed on a scale (not shown but similar to scale 434) that measures the weight of the refrigerant in the storage tank.

Other components shown in FIG. 5 include an oil inject circuit having an oil inject valve 302 and an oil inject hose or line 311. The oil inject hose 311 is one example of a fluid transportation means for transmitting oil for the refrigerant recovery unit 200. The oil inject hose 311 may be one length of hose or multiple lengths of hose or tubing or any other suitable means for transporting fluid. The oil inject hose 311 connects on one end to an oil inject bottle 314 and on the other end couples to the refrigerant circuit in the refrigerant recovery unit 200. Disposed along the length of the oil inject hose 311 are the oil inject valve 302 and an oil check valve 304. The oil inject path follows from the oil inject bottle 314, through the oil inject solenoid 302, to the junction with the high side charge line 326, and to the vehicle's refrigerant system 200.

FIG. 5 also illustrates a vacuum pump oil drain circuitry 350 that includes a vacuum pump oil drain valve 352 that is located along a vacuum pump oil drain conduit 354 connecting a vacuum pump oil drain outlet 359 to the container 357 for containing the drained vacuum pump oil. The vacuum pump oil drain valve 352 may be an electronically activated solenoid valve controlled by controller 316. The activation may be a wireless or wired connection. In other embodiments the valve 352 may be a manually activated valve and manually actuated by a user. The conduit 354 may be a flexible hose or any other suitable conduit for provided fluid communication between the outlet 359 and the container 357.

FIG. 5 also illustrates an air purging apparatus 408. The air purging apparatus 408 allows the refrigerant recovery unit 200 to be purged of non-condensable, such as air. Air purged from the refrigerant recovery unit 200 may exit the storage tank 312, through an orifice 412, through a purging valve 414 and through an air diffuser 416. In some embodiments, the orifice may be 0.028 of an inch. Although the orifice may be larger or smaller, as desired than 0.028 in. A pressure transducer 410 may measure the pressure contained within the storage tank 312 and purge apparatus 408. The pressure transducer 410 may send the pressure information to the controller 316. And when the pressure is too high, as calculated by the controller, purging is required for the storage tank 312. The valve 414 may be selectively actuated to permit or not permit the purging apparatus 408 to be open to the ambient conditions. A temperature sensor 417 may be coupled to the main tank to measure the refrigerant temperature therein. The placement of the temperature sensor 417 may be anywhere on the tank or alternatively, the temperature sensor may be placed within a refrigerant line 422. The measured temperature and pressure may be used to calculate the ideal vapor pressure for the type of refrigerant used in the refrigerant recovery unit. The ideal vapor pressure can be used to determine when the non-condensable gases need to be purged and how much purging will be done in order to get the refrigerant recovery unit 200 to function properly.

High side clearing valves 418 may be used to clear out part of the high-pressure side of the unit 200. The high side clearing valves 418 may include valve 423 and check valve 420. Valve 423 may be a solenoid valve. When it is desired to clear part of the high side, valve 423 is opened. Operation of the compressor 356 will force refrigerant out of the high pressure side through valves 423 and 420 and into the storage tank 312. During this procedure the normal discharge valve 384 may be closed.

A deep recovery valve 424 is provided to assist in the deep recovery of refrigerant. When the refrigerant from the refrigerant system 300 has, for the most part, entered into the refrigerant recovery unit 200, the remaining refrigerant may be extracted from the refrigerant system 300 by opening the deep recovery valve 424 and turning on the vacuum pump 358.

In another embodiment, in order to charge the refrigerant system 300, the power charge valve 426 may be opened and a tank fill structure 432 may be used. Alternatively or in addition to, the tank fill structure 432 may also be used to fill the storage tank 312. In order to obtain refrigerant from a refrigerant source, the refrigerant recovery unit 200 may include the tank fill structure 432, and valves 428 and 430. The tank fill structure 432 may be configured to attach to a refrigerant source. The valve 430 may be a solenoid valve and the valve 428 may be a check valve. In other embodiments, valve 430 may be a manually operated valve.

When it is desired to allow refrigerant from a refrigerant source to enter the refrigerant recovery unit 200, the tank fill structure 432 is attached to the refrigerant source and the tank fill valve 430 is opened. The check valve 428 prevents refrigerant from the refrigerant recovery unit 200 from flowing out of the refrigerant recovery unit 200 through the tank fill structure 432. When the tank fill structure 432 is not connected to a refrigerant source, the tank fill valve 430 is kept closed. The tank fill valve 430 may be connected to and controlled by the controller 316.

The tank fill structure 432 may be configured to be seated on the scale 434 configured to weigh the tank fill structure 432 in order to determine an amount of refrigerant stored in the tank fill structure 432. The scale 434 may be operatively coupled to the controller 316 and provide a measurement of a weight of the tank fill structure 432 to the controller 316. The controller 316 may cause a display of the weight of the tank fill structure 432 on the display 210.

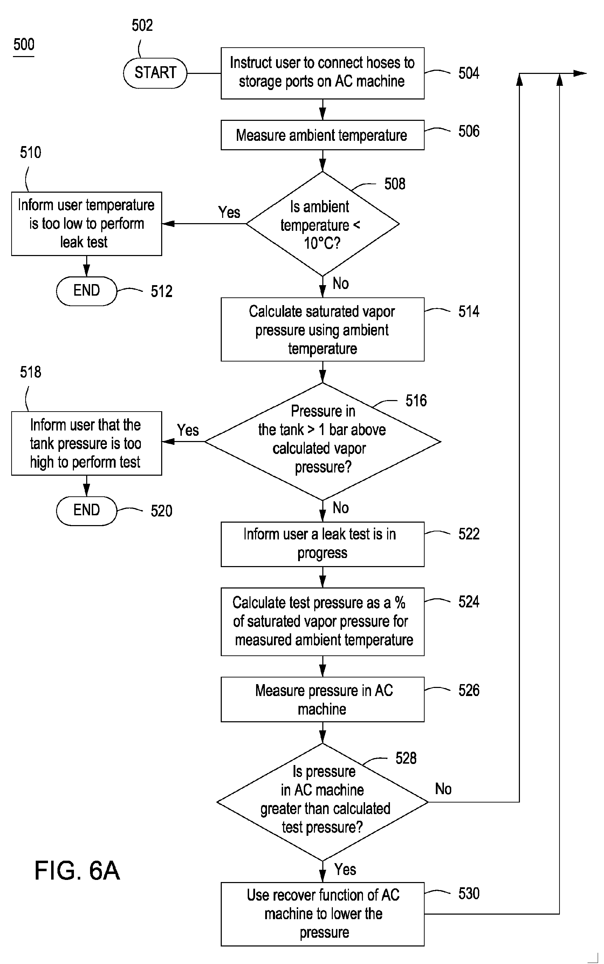

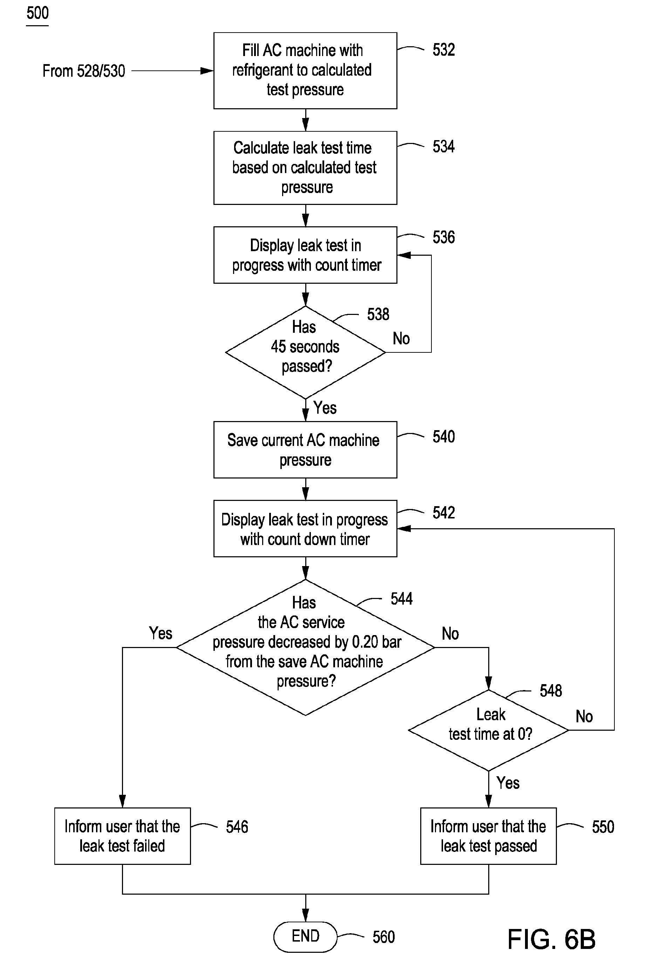

As the refrigerant recovery unit 10, 200 operate under pressure, refrigerant leaks will occur over time. These leaks need to be fixed so that refrigerants are not vented into the atmosphere. Further, new refrigerants such as 1234yf are flammable and thus, can be a fire hazard. FIG. 6A and 6B illustrate a method 500 to check for refrigerant leaks that may occur in the refrigerant recovery unit 10, 200. This method may be conducted manually, via software implementing the method or a combination of both. These steps may be implemented on either or both of refrigerant recovery unit 10, 200, but will be described in relation to refrigerant recovery unit 200.

At step 502, the method begins. At step 504, an instruction appears on the display and instructs the user to connect the hoses 224, 228 to storage ports 232. By connecting or coupling the hoses 224, 228 to the storage ports 232, a "closed loop" is formed in the refrigerant recovery unit 200. Additionally, this allows the hoses and their associated couplers to all be pressure leak tested. Alternatively, the couplers that attach the refrigerant recovery unit 200 to the hoses 224, 228 may be shut off for the pressure leak test.

At step 506, the ambient temperature can be measured using the temperature sensor 230 and the measured temperature can be relayed to the controller 316. The temperature sensor 230 can be located at any part of the refrigerant recovery unit 200 such as on the side of the cabinet.

At step 508, determine whether the ambient temperature is less than about 10°C. The refrigerant recovery unit 10 operates at about 10°C so the pressure leak test would not be performed below this temperature because mixing warm refrigerant (from the storage tank that has recently recovered refrigerant) with refrigerant in the refrigerant recovery unit 200 that was not operating at the normal temperature can skew the results of the test or provide false positives. In other embodiments, the refrigerant recovery unit 200 may operate at a lower or higher temperature such as 6-9 °C or 11-13°C depending on the manufacturer.

If yes at step 508, then proceed to step 510, where the user is informed via the display that the temperature is too low to run the leak test. Then the method ends at step 512. If no at step 508, then proceed to step 514.

At step 514, the saturated vapor pressure is calculated using the ambient temperature measure by the temperature sensor 230. In one embodiment, the following formulas are used:

y = pressure in psig
x = temperature in °F

For R-134a:

$$y = (4.7157887 * 10^{-8}) * x^4 + (1.2348358 * 10^{-5}) * x^3 + (5.3215 * 10^{-3}) * x^2 + (4.740976 * 10^{-1}) * x + 6.6407031$$

For R-1234yf:

$$y = (4.6512538 * 10^{-8}) * x^4 + (98.3574939 * 10^{-6}) * x^3 + (5.0550861 * 10^{-3}) * x^2 + (4.9971197 * 10^{-1}) * x + 9.0615092$$

At step 516, once the saturated vapor pressure is calculated in step 514, then measure the pressure in the refrigerant tank 312, via the pressure transducer 410, and determine if the pressure in the refrigerant tank 312 is greater than about one bar above the calculated saturated vapor pressure. In other embodiments, the pressure can be about between 2-4 bars. If yes, then proceed to step 518 where the user is informed on the display that the pressure in the refrigerant tank is too high to perform the pressure leak test and the method ends at step 520. If at step 5216, the answer is no, then proceed to step 522 where the user is informed, via the display, that the pressure leak test is in progress.

At step 524, calculate the test pressure as a percentage of the calculated saturated vapor pressure for the measured ambient temperature. The percentage can be from about 45-98%, from about 60-98%, from about 75-95%, from about 80-90%, from about 90-98% and any range above or below. The closer the test pressure is to the saturated vapor pressure, the better. At step 526, measure the pressure in the refrigerant recovery unit through the pressure transducer 392 and relay the measured pressure to controller 316. The appropriate valves in the refrigerant recovery unit can be opened so that the pressure of the unit can be properly measured. At step 528, determine if the measured pressure in the refrigerant recovery unit is greater than the calculated test pressure. If no, then proceed to step 532. If yes, then proceed to step 530 where the refrigerant recovery unit 200 operates in the recovery function to reduce the refrigerant in the unit and thereby, reduce the pressure in the unit. This can be done automatically by the refrigerant recovery unit 200 or manually by user being prompted on the display. Then proceed to step 532.

At step 532, fill refrigerant recovery unit with refrigerant to raise the pressure in the unit to the calculated test pressure. This can be done automatically by the refrigerant recovery unit 200 or manually by user being prompted on the display. As refrigerant is circulated in the refrigerant recovery unit 200, the pressure is increased. At step 534, calculate the leak test time based on calculated test pressure. In one embodiment, time can be 222985/sqrt(pressure). If the unit is cool then a longer leak time can be used and if the unit is already warm, then a shorter leak test time can be used. Similarly, if the pressure is low, then a longer leak test time can be used. Conversely, if the pressure is high, then a shorter leak test time can be used. However, any amount of time can be used as long as it is enough to detect leaks including smaller leaks. Additionally, the leak test can be simply run for a fixed amount of time without being calculated. For example, for 3 minutes, 5 minutes, 7 minutes, 10 minutes, or other times.

At step 536, display, via the display, the leak test in progress with a countdown timer. The timer may be 5 minutes. At step 538, determine if at least 45 seconds has passed. Other time that can be utilized at this step include a range of 15-60 seconds, 30-45 seconds or any other time period that will stabilize the unit for proper testing parameters. If no, then proceed back to step 536 to complete the 45 seconds. If yes, then proceed to step 540, where the current pressure of the refrigerant recovery unit is measured and stored to the memory. At step 542, the display can display that the leak test is in progress and the countdown timer is the amount determined in step 534.

At step 544 determine if pressure in the refrigerant recovery unit has decreased by .20 bar from the saved measured pressure of step 540. Other amounts can be used including .10-.80 bar, .15-.70 bar or other pressure amounts. If no, then at step 548 determine if leak test time is at 0? If not, then return to step 542. If yes, then at step 550, informed the user, via the display, that the pressure leak test passed. That is, the refrigerant recovery unit passed the pressure leak test. Then end at step 560. Returning to step 544, if yes, then proceed to step 546 and inform the user, via the display, that the pressure leak test failed. Then end at step 560.

By running the pressure leak test described herein, the refrigerant recovery unit can be checked for leaks. This allows the refrigerant recover unit to operate within the relevant industry standards.

The many features and advantages of the invention are apparent from the detailed specification, and thus, it is intended by the appended claims to cover all such features and advantages of the invention which fall within the true spirit and scope of the invention. Further, since numerous modifications and variations will readily occur to those skilled in the art, it is not desired to limit the invention to the exact construction and operation illustrated and described, and accordingly, all suitable modifications and equivalents may be resorted to, falling within the scope of the invention.

## Claims

1. A method of performing a pressure leak test on a refrigerant recovery unit, comprising the steps of:

   measuring an ambient temperature with a temperature sensor controlled by a controller of the refrigerant recovery unit;
   determining a saturated vapor pressure with the measured ambient temperature using the controller;
   determining a test pressure as a percentage of the determined saturated vapor pressure using the controller;
   measuring a first pressure in the refrigerant recovery unit with a pressure sensor controlled by the controller; and
   determining if the refrigerant recovery unit has passed the pressure leak test with the controller.

2. The method of claim 1 further comprising the steps of:

   determining if the measured first pressure of the refrigerant recovery unit is above the determined test pressure using the controller;
   determining a pressure leak test time based on the determined test pressure; and
   running the pressure leak test based on the determined pressure leak test time.

3. The method of claim 2 further comprising the steps of:

   performing a recovery function if the measured first pressure of the refrigerant recovery unit is above the determined test pressure; and
   cycling refrigerant in the refrigerant recovery unit until the refrigerant recovery unit reaches the determined test pressure.

4. The method of claim 1 further comprising the steps of:

   determining if the measured ambient temperature is below 10°C; and
   alerting a user that the ambient temperature is too low to run the pressure leak test when the measured ambient temperature is below 10°C.

5. The method of claim 1 further comprising the steps of:

   determining if a measured tank pressure is above the determined saturated vapor pressure; and

alerting a user that the measured tank pressure is too high to run the pressure leak test when the measured tank is above the calculated saturated pressure.

6. The method of claim 2 further comprising the steps of:

allowing the refrigerant recovery unit to stabilize;
measuring a second pressure of the refrigerant recovering unit with the pressure sensor; and
saving the second pressure of the refrigerant recovery unit into a memory, wherein the refrigerant recovery unit passes the pressure leak test if a third measured pressure of the refrigerant recovery unit does not decrease beyond a predetermined amount from the saved the second measured pressure of the refrigerant recovery unit.

7. The method of claim 6, wherein the predetermined amount is about 0.20 bar.

8. The method of claim 2 further comprising the steps of:

allowing the refrigerant recovery unit to stabilize;
measuring a second pressure of the refrigerant recovering unit with the pressure sensor;
saving the measured second pressure of the refrigerant recovery unit into a memory, wherein the refrigerant recovery unit fails the pressure leak test if a third measured pressure of the refrigerant recovery unit decreases beyond a predetermined amount from the saved second measured pressure of the refrigerant recovery unit.

9. The method of claim 8, wherein the predetermined amount is about 0.20 bar.

10. A refrigerant recovery unit having a pressure leak test, comprising:

a recovery circuit configured to recover a refrigerant from a refrigerant system;
a charging circuit configured to charge the refrigerant into the refrigerant system;
a recycling circuit configured to recycle refrigerant recovered from the refrigerant system;
a refrigerant storage tank in fluid communication with the recovery, charging and recycling circuits; and
a controller that controls the recovery, charging and recycling circuits, wherein the controller performs the following steps:

measuring an ambient temperature with a temperature sensor;
determining a saturated vapor pressure with the measured ambient temperature;
determining a test pressure as a percentage of the determined saturated vapor pressure;
measuring a first pressure in the refrigerant recovery unit with a first pressure sensor;
determining if the measured first pressure of the refrigerant recovery unit is above the determined test pressure; and
determining if the refrigerant recovery unit has passed the pressure leak test.

11. The refrigerant recovery unit of claim 10, wherein the controller further perform the following steps:

determining a pressure leak test time based on the determined test pressure; and
running the pressure leak test based on the determined pressure leak test time.

12. The refrigerant recovery unit of claim 10, wherein the refrigerant storage tank is coupled to a second pressure sensor, wherein the second pressure sensor communicates with the controller.

13. The refrigerant recovery unit of claim 10 further comprising of hoses configured to couple to hose couplers to form a closed loop with the refrigerant recovery unit.

14. The refrigerant recovery unit of claim 10 further comprising:

a purging circuit configured to purge non-condensable from the refrigerant recover unit and controlled by the controller.

15. The refrigerant recovery unit of claim 10 further comprising:

a display configured to display an instruction and information to the user regarding an operation of the refrigerant recovery unit.

FIG. 1

FIG. 2

FIG. 3

FIG. 4

FIG. 5

500

502

START — 502

Instruct user to connect hoses to storage ports on AC machine — 504

Measure ambient temperature — 506

510

Inform user temperature is too low to perform leak test — 510

Yes ← Is ambient temperature < 10°C? — 508

END — 512

No

Calculate saturated vapor pressure using ambient temperature — 514

518

Inform user that the tank pressure is too high to perform test — 518

Yes ← Pressure in the tank > 1 bar above calculated vapor pressure? — 516

END — 520

No

Inform user a leak test is in progress — 522

Calculate test pressure as a % of saturated vapor pressure for measured ambient temperature — 524

Measure pressure in AC machine — 526

Is pressure in AC machine greater than calculated test pressure? — 528

No →

FIG. 6A

Yes

Use recover function of AC machine to lower the pressure — 530

500

```
From 528/530 ──────▶  ┌─────────────────────┐
                      │ Fill AC machine with │ ～ 532
                      │ refrigerant to calculated │
                      │ test pressure        │
                      └──────────┬──────────┘
                                 │
                                 ▼
                      ┌─────────────────────┐
                      │ Calculate leak test time │ ～ 534
                      │ based on calculated test │
                      │ pressure             │
                      └──────────┬──────────┘
                                 │
                                 ▼
                      ┌─────────────────────┐◀──┐
                      │ Display leak test in │ ～ 536
                      │ progress with count timer │
                      └──────────┬──────────┘   │
                                 │              │
                                 ▼              │ No
                            ╱───────╲           │
                           ╱  Has    ╲ ～ 538    │
                          ╱ 45 seconds ╲─────────┘
                          ╲  passed?   ╱
                           ╲         ╱
                            ╲───────╱
                                 │ Yes
                                 ▼
                      ┌─────────────────────┐
                      │ Save current AC machine │ ～ 540
                      │ pressure             │
                      └──────────┬──────────┘
                                 │
                                 ▼
                      ┌─────────────────────┐◀────────────┐
                      │ Display leak test in progress │ ～ 542
                      │ with count down timer │              │
                      └──────────┬──────────┘              │
                                 │                         │
                                 ▼                         │
                            ╱─────────────╲                │
                           ╱    Has        ╲ ～ 544         │
                          ╱ the AC service   ╲             │
          Yes           ╱ pressure decreased by 0.20 bar ╲  No
        ┌──────────────╱  from the save AC machine  ╲──────┤
        │              ╲       pressure?          ╱        │
        │               ╲                        ╱         ▼
        │                ╲──────────────────────╱     ╱─────────╲
        │                                            ╱   Leak    ╲ ～ 548   No
        │                                           ╱ test time at 0? ╲────┘
        │                                           ╲               ╱
        │                                            ╲─────────────╱
        │                                                 │ Yes
        ▼                                                 ▼
  ┌──────────────┐                              ┌──────────────┐
  │ Inform user that the │ ～ 546                 │ Inform user that the │ ～ 550
  │ leak test failed │                           │ leak test passed │
  └──────┬───────┘                              └──────┬───────┘
         │                                              │
         └──────────────────┬──────────────────────────┘
                            ▼
                        ╭─────────╮
                        │  END    │ ～ 560
                        ╰─────────╯
```

FIG. 6B

Europäisches
Patentamt

European
Patent Office

Office européen
des brevets

# EUROPEAN SEARCH REPORT

Application Number

EP 12 16 8127

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KR 2000 0006880 A (ENTECH CO LTD [KR]) 7 February 2000 (2000-02-07) * the whole document * ----- | 1-15 | INV. G01M3/26 B60H1/00 F25B41/00 F25B45/00 G01M3/32 |
| A | US 6 205 798 B1 (PORTER KEVIN J [US] ET AL) 27 March 2001 (2001-03-27) * abstract * * figures 3,4 * * column 9, line 38 - column 12, line 46 * ----- | 1-15 | |

TECHNICAL FIELDS
SEARCHED (IPC)

G01M
B60H
F25B

The present search report has been drawn up for all claims

| Place of search | Date of completion of the search | Examiner |
|---|---|---|
| The Hague | 24 September 2012 | Nelva-Pasqual, F |

EPO FORM 1503 03.82 (P04C01)

**ANNEX TO THE EUROPEAN SEARCH REPORT
ON EUROPEAN PATENT APPLICATION NO.**                EP 12 16 8127

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-2012

| Patent document cited in search report | | Publication date | Patent family member(s) | | Publication date |
|---|---|---|---|---|---|
| KR 20000006880 | A | 07-02-2000 | NONE | | |
| US 6205798 | B1 | 27-03-2001 | EP | 1022552 A2 | 26-07-2000 |
| | | | ES | 2333692 T3 | 26-02-2010 |
| | | | US | 6205798 B1 | 27-03-2001 |

For more details about this annex : see Official Journal of the European Patent Office, No. 12/82